# EUROPÄISCHE PATENTANMELDUNG

(11) **EP 3 358 689 A1**
(43) Veröffentlichungstag der Anmeldung: **08.08.2018**
(21) Anmeldenummer: 17154872.0
(22) Anmeldetag: 06.02.2017
(51) Int. Cl.: H02B 5/00, H02B 3/00

(54) **ELEKTRISCHES SCHALTFELDMODUL**

(71) Anmelder: Axpo Power AG, 5401 Baden (CH)
(72) Erfinder: Pape, Frank Rainer, 5401 Baden (CH); Schulz, Ingo, 5401 Baden (CH); Hutter, Michael, 5401 Baden (CH)
(74) Vertreter: Meyer, Michael Josef

(57) **Zusammenfassung**

Die Erfindung betrifft ein elektrisches Schaltfeldmodul für eine luftisolierte elektrische Schaltanlage. Das elektrische Schaltfeldmodul (10) besitzt einen Tragrahmen (20), der für die Aufnahme mehrerer elektrischer Standard-Betriebsmittel (30, 31, 32) zum Betrieb eines elektrischen Schaltfeldes (15) vorgesehen ist.

## Beschreibung

### Gebiet der Erfindung

Die Erfindung betrifft ein elektrisches Schaltfeldmodul für eine luftisolierte elektrische Schaltanlage.

### Hintergrund

Elektrische Schaltanlagen werden in elektrischen Energieverteilungsnetzen zur Umspannung und Verteilung der elektrischen Energie eingesetzt und umfassen auf einem abgegrenzten Raum die für die Verteilung bzw. Umspannung benötigten Betriebsmittel. Eine elektrische Schaltanlage weist üblicherweise mehrere Schaltfelder auf, welche jeweils die Betriebsmittel für eine einzelne vordefinierte Verteilungsaufgabe umfassen.

Schaltanlagen können für Nieder-, Mittel-, und Hochspannung ausgelegt sein. Für Hochspannungsschaltanlagen kommen sowohl luftisolierte als auch gasisolierte Schaltanlagen zum Einsatz. Gasisolierte Schaltanlagen können wesentlich kompakter als luftisolierte Schaltanlagen gebaut werden und werden üblicherweise in Betriebsgebäuden untergebracht. Allerdings sind die Investitionskosten in der Regel höher als bei luftisolierten Schaltanlagen, die im Freien aufgestellt werden.

Luftisolierte Schaltanlagen können eine sehr lange Lebensdauer haben. Die Betriebsmittel der einzelnen Schaltfelder von herkömmlichen luftisolierten Schaltanlagen werden üblicherweise separat auf einzelnen Stützen montiert und dann miteinander verseilt. Die einzelnen Stützen sind dabei auf einem Betonfundament befestigt. Daher ist der Bau derartiger Schaltfelder relativ aufwendig.

### Darstellung der Erfindung

Es ist eine Aufgabe der vorliegenden Erfindung, ein elektrisches Schaltfeldmodul für eine luftisolierte elektrische Schaltanlage zu schaffen, welches den Bau und Betrieb von Schaltfeldern einer luftisolierten elektrischen Schaltanlage erleichtert.

Diese Aufgabe wird in einem ersten Aspekt der Erfindung von einem elektrischen Schaltfeldmodul für eine luftisolierte elektrische Schaltanlage gemäss Anspruch 1 gelöst.

Demgemäss besitzt das elektrische Schaltfeldmodul einen Tragrahmen, der für die Aufnahme mehrerer elektrischer Standard-Betriebsmittel zum Betrieb eines elektrischen Schaltfeldes vorgesehen ist.

Ein derartiges Schaltfeldmodul hat den Vorteil, dass eine Vielzahl von Standard-Betriebsmitteln auf dem Tragrahmen angeordnet werden können. Dies hat den Vorteil, dass die Standard-Betriebsmittel bereits im Fertigungsbetrieb an dem Tragrahmen befestigt werden können. In einem derart vormontierten Zustand kann das Schaltfeldmodul insgesamt sowie die einzelnen Betriebsmittel bereits getestet werden. Die Verwendung von Standard-Betriebsmitteln hat den Vorteil, dass die einzelnen Betriebsmittel in besonders einfacher und kostengünstiger Weise mit neuen Betriebsmitteln ausgetauscht werden können. Dies kann insbesondere auch herstellerunabhängig geschehen, d.h. eine defekte Komponente eines ersten Herstellers kann mit einer neuen Komponente eines anderen Herstellers ersetzt werden. Dies ist insbesondere aufgrund der langen Nutzungsdauer luftisolierter Schaltfelder von 40 und mehr Jahren ein wesentlicher Vorteil. Ausserdem ermöglicht das Anordnen von mehreren Komponenten auf einem gemeinsamen Tragrahmen das Einsparen von Betonfundamenten und damit eine schnelle und effiziente Montage in der jeweiligen luftisolierten Schaltanlage. Während bei bekannten luftisolierten Schaltfeldern in der Regel jedes einzelne Betriebsmittel auf einem separaten Betonfundament angeordnet ist, kann der erfindungsgemässe Tragrahmen und das Schaltfeldmodul gemäss bevorzugten Ausgestaltungen der Erfindung auf lediglich zwei streifenförmigen Betonfundamenten oder lediglich vier punktförmigen Betonfundamenten angeordnet und befestigt werden.

Als Standard-Betriebsmittel werden allgemein Betriebsmittel bezeichnet, die gemäss einem einschlägigen Standard bzw. einer einschlägigen Norm ausgebildet sind.

Insbesondere sind gemäss einer bevorzugten Ausgestaltung der Erfindung die Standard-Betriebsmittel jeweils nur für eine einzelne Funktion ausgelegt, insbesondere für eine Funktion gemäss den Normen EN 62271-100, IEC 61869-1/2/3, EN 62271-102, IEC 60099-5, IEC 60840 oder IEC 60044-7/8.

Gemäss dieser Ausgestaltung erfüllen die Standard-Betriebsmittel somit eine der einschlägigen Betriebsmittelnormen. Dadurch, dass die Standard Betriebsmittel nur für eine einzige Funktion ausgelegt sind, kann sichergestellt werden, dass herstellerunabhängig jedes Betriebsmittel verwendet werden kann, dass die jeweils einschlägige Norm erfüllt. Dadurch wird ein einfacher und kostengünstiger Ersatz von defekten Betriebsmitteln ermöglicht.

Gemäss einer bevorzugten Ausgestaltung der Erfindung sind an dem Tragrahmen als Standard-Betriebsmittel je Phase ein Leistungsschalter, eine Messeinheit, insbesondere eine Messgruppe, und ein Trenner, insbesondere ein Linientrenner, angeordnet.

Damit lässt sich ein grosser Teil eines Schaltfeldes als vorgefertigtes Modul fabrizieren. Dieses vorgefertigte Modul kann dann im Feld an einen Sammelschienentrenner angeschlossen werden, wodurch in effizienter Weise ein komplettes Schaltfeld geschaffen werden kann. Die Messeinheit ist zum Messen von Strom und/oder Spannung der jeweiligen Hochspannungsleitung vorgesehen.

Gemäss einer weiteren bevorzugten Ausgestaltung der Erfindung sind an dem Tragrahmen als Standard-Betriebsmittel je Phase ein Überspannungsableiter und ein Kabelendverschluss angeordnet.

Mit diesen Betriebsmitteln kann das Schaltfeldmodul mit weiteren Funktionen ergänzt und komplettiert werden.

Gemäss einer bevorzugten Ausgestaltung der Erfindung weist der Tragrahmen ein erstes oberes Stirnelement, ein zweites oberes Stirnelement und Längsstreben, insbesondere drei Längsstreben, auf. Das erste und das zweite obere Stirnelement sind rechteckförmig oder quadratisch ausgebildet. Die Längsstreben verbinden das erste obere Stirnelement und das zweite obere Stirnelement.

Eine derartige Tragrahmenkonstruktion ist für das erfindungsgemässe Schaltfeldmodul sowohl fertigungstechnisch, funktionstechnisch als auch in statischer Hinsicht in besonderer Weise vorteilhaft. Insbesondere verleihen die rechteckförmigen oder quadratischen Stirnelemente der Tragrahmenkonstruktion eine hohe Grundstabilität. Die drei zwischen den Stirnelementen angeordneten Längsstreben können für jede Phase jeweils ein oder mehrere Betriebsmittel aufnehmen.

Gemäss einer bevorzugten Ausgestaltung der Erfindung weist der Tragrahmen zudem Kragarme auf, die jeweils an dem ersten oberen Stirnelement und dem zweiten oberen Stirnelement befestigt sind und sich von dem ersten oberen Stirnelement bzw. dem zweiten oberen Stirnelement in horizontaler Richtung entgegen den Längsstreben nach aussen hin erstrecken.

Damit kann das Schaltfeldmodul in effizienter und platzsparender Weise mit weiteren Funktionen (z.B. Überspannungsschutz, Kabelschutz) ausgestattet werden.

Gemäss einer weiteren bevorzugten Ausgestaltung der Erfindung weist das Schaltfeldmodul ein erstes unteres Stirnelement und ein zweites unteres Stirnelement auf. Das erste und das zweite untere Stirnelement sind rechteckförmig oder quadratisch ausgebildet. Das erste untere Stirnelement ist mit dem ersten oberen Stirnelement verbindbar, insbesondere verschraubbar. Ferner ist das zweite untere Stirnelement mit dem zweiten oberen Stirnelement verbindbar, insbesondere verschraubbar. Das erste untere Stirnelement und das zweite untere Stirnelement weisen jeweils ein unteres horizontales Auflageelement auf, welches zur Auflage auf einem Betonfundament dient.

Mit einer derartigen Konstruktion kann die Höhe des Schaltfeldmoduls für den Transport in sehr effizienter Weise verringert werden und gleichzeitig kann das Modul dennoch in der Schaltanlage sehr schnell und einfach aufgebaut werden. So können das erste und das zweite untere Stirnelement zum Transport abgeschraubt und separat transportiert werden. Dadurch wird es möglich, das Schaltfeldmodul mit einem Auflieger auf dem Strassennetz zu transportieren. Vor Ort in der Schaltanlage können dann das erste und das zweite untere Stirnelement wieder an das erste obere bzw. zweite obere Stirnelement angeschraubt werden, um die nötige lichte Höhe über Erde des Schaltfeldmoduls zu gewährleisten. Die Höhe der unteren Stirnelemente kann je nach Bedarf variiert werden, um die für die jeweilige Einbausituation erforderliche lichte Höhe des Schaltfeldmoduls zu erzielen. Damit kann die lichte Höhe des Schaltfeldmoduls sehr flexibel und effizient geändert und angepasst werden.

Gemäss einer bevorzugten Ausgestaltung der Erfindung ist der Tragrahmen erdbebenfest ausgeführt, insbesondere bis zu einer Beschleunigung von 0.5g.

Gemäss einer bevorzugten Ausgestaltung der Erfindung ist der Tragrahmen als Metallrahmen ausgeführt, insbesondere als Tragrahmen aus Baustahl. Vorzugsweise ist der Tragrahmen mit einer Oberflächenbeschichtung ausgeführt. Besonders bevorzugt kann der Tragrahmen verzinkt sein.

Gemäss einer bevorzugten Ausgestaltung der Erfindung sind die elektrischen Standard-Betriebsmittel auf dem ersten oberen Stirnelement, dem zweiten oberen Stirnelement, den Längsstreben und den Kragarmen angeordnet.

Dies ermöglicht eine verteilte Anordnung der Betriebsmittel auf dem Tragrahmen, die besonders effiziente, platzsparende und statisch vorteilhaft ist.

Gemäss einer bevorzugten Ausgestaltung der Erfindung umfasst der Tragrahmen ein Erdungssystem, das wenigstens zwei Anschlusspunkte zum Anschluss an die Erdung der luftisolierten Schaltanlage aufweist.

Dadurch kann die Erdung des Schaltfeldmoduls bereits ab Fabrik oder Werkstatt vormontiert und getestet werden. In der Schaltanlage kann das vormontierte Erdungssystem dann sehr schnell, sicher und effizient mit lediglich zwei Anschlusspunkten an die Erdung der Schaltanlage angeschlossen werden. Im Vergleich zu herkömmlichen luftisolierten Schaltanlagen ist das ein grosser Vorteil, da dort jedes einzelne Betriebsmittel separat geerdet werden muss.

Gemäss einer bevorzugten Ausgestaltung der Erfindung umfasst der Tragrahmen vordefinierte Befestigungspunkte für die Befestigung der elektrischen Standard-Betriebsmittel. Die Befestigungspunkte sind dabei insbesondere derart gewählt, dass die Isolationsabstände der Norm EN61936-1 entsprechen. Gemäss einer weiteren bevorzugten Ausgestaltung weist der Tragrahmen vorgebohrte Befestigungspunkte für Standard-Betriebsmittel verschiedener Hersteller auf.

Derartige Ausgestaltungen haben den Vorteil, dass sie die Montage und den Ersatz von Standard-Betriebsmitteln weiter erleichtern und gewährleisten, dass die Standard-Betriebsmittel an den richtigen Stellen positioniert werden, die einen sicheren Betrieb gewährleisten.

Gemäss einer bevorzugten Ausgestaltung der Erfindung ist das Modul für einen Spannungsbereich zwischen 72 kV und 170 kV vorgesehen. Gemäss einer besonders bevorzugten Ausgestaltung der Erfindung ist das Modul für einen Spannungsbereich zwischen 72 kV und 145 kV vorgesehen.

Dieser Spannungsbereich ist für das erfindungsgemässe Schaltfeldmodul besonders vorteilhaft. Insbesondere können die Dimensionen des Schaltfeldmoduls für diesen Spannungsbereich so optimiert werden, dass ein Strassentransport des Schaltfeldmoduls möglich ist.

So weist das Schaltfeldmodul gemäss einer bevorzugten Ausgestaltung der Erfindung eine Länge zwischen 7 m und 9 m und eine Breite zwischen 3.5 m und 4.5 m auf.

Dies ermöglicht einen Transport auf einem Auflieger.

Gemäss einer bevorzugten Ausgestaltung der Erfindung weist der Tragrahmen eine Sekundärverkabelung für die Ansteuerung der elektrischen Standard-Betriebsmittel auf.

Die Sekundärverkabelung kann alle für die Ansteuerung und den Betrieb der Standard-Betriebsmittel notwendigen Kabel enthalten. Dadurch kann die korrekte Funktionsweise des Schaltfeldmoduls inklusive der gesamten Sekundärverkabelung des Schaltfeldmoduls bereits in der Fabrik oder Werkstatt getestet werden.

Gemäss einer bevorzugten Ausgestaltung der Erfindung ist an dem Tragrahmen ein Steuerschrank befestigt, der mit der Sekundärverkabelung elektrisch verbunden ist. Der Steuerschrank umfasst sowohl Steuerelektronik zur Steuerung der elektrischen Standard-Betriebsmittel als auch elektrische Schutzkomponenten.

Dadurch kann einerseits die korrekte Funktionsweise des Schaltfeldmoduls inklusive der Funktionsweise des Steuerschranks bereits in der Fabrik oder Werkstatt getestet werden. Andererseits erleichtert eine derartige Ausgestaltung auch die Montage in der elektrischen Schaltanlage. Insbesondere kann durch diese Ausgestaltung der Erfindung eine aufwendige Verkabelung zwischen dem Betriebsgebäude, in dem bei herkömmlichen Schaltanlagen die Steuer- und Schutztechnik untergebracht ist, vermieden werden. Die Schutzkomponenten können die gesamte Schutztechnik zum Schutz des Schaltfeldes umfassen, insbesondere ein Schutzrelais.

Gemäss einer bevorzugten Ausgestaltung der Erfindung sind die Kabelendverschlüsse an den Kragarmen des ersten oberen Stirnelementes angeordnet, der Leistungsschalter ist an den Kragarmen des zweiten oberen Stirnelementes angeordnet, die Überspannungsableiter sind an dem ersten oberen Stirnelement, die Messeinheiten an dem zweiten oberen Stirnelement und die Trenner an den Längsstreben des Schaltfeldmoduls angeordnet.

Dies ist eine besonders effiziente, platzsparende und statisch vorteilhafte verteilte Anordnung der Betriebsmittel auf dem Tragrahmen.

Gemäss einem zweiten Aspekt der Erfindung ist ein elektrisches Schaltfeld vorgesehen, welches ein elektrisches Schaltfeldmodul gemäss dem ersten Aspekt der Erfindung und einen Sammelschienentrenner, insbesondere einen Pantographentrenner, aufweist.

Gemäss Ausführungsformen der Erfindung kann das elektrische Schaltfeldmodul gemäss dem ersten Aspekt somit mit einem Sammelschienentrenner, der in eine Sammelschiene integriert ist, zu einem Schaltfeld kombiniert werden. Ein derartiges Schaltfeld kann insbesondere auch mit einem Pantographentrenner realisiert werden.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
FIG. 1 zeigt eine 3-dimensionale Ansicht einer luftisolierten elektrischen Schaltanlage mit einem elektrischen Schaltfeldmodul gemäss einer Ausführungsform der Erfindung;
FIG. 2 zeigt eine zu der 3-dimensionalen Ansicht gemäss FIG. 1 korrespondierende Seitenansicht der luftisolierten elektrischen Schaltanlage;
Fig. 3 zeigt eine vergrösserte 3-dimensionale Ansicht des elektrischen Schaltfeldmoduls;
Fig. 4 zeigt eine andere vergrösserte 3-dimensionale Ansicht des elektrischen Schaltfeldmoduls;
Fig. 5 zeigt eine Explosionsansicht eines Tragrahmens des elektrischen Schaltfeldmoduls;
FIG. 6 zeigt eine vergrösserte 3-dimensionale Ansicht des elektrischen Schaltfeldmoduls mit Anschluss an einen Sammelschienentrenner inklusive einem integrierten Erdungssystem; und
FIG. 7 zeigt eine vergrösserte 3-dimensionale Ansicht von unten auf das elektrische Schaltfeldmodul mit Kabelkanälen für eine Sekundärverkabelung.

### Weg(e) zur Ausführung der Erfindung

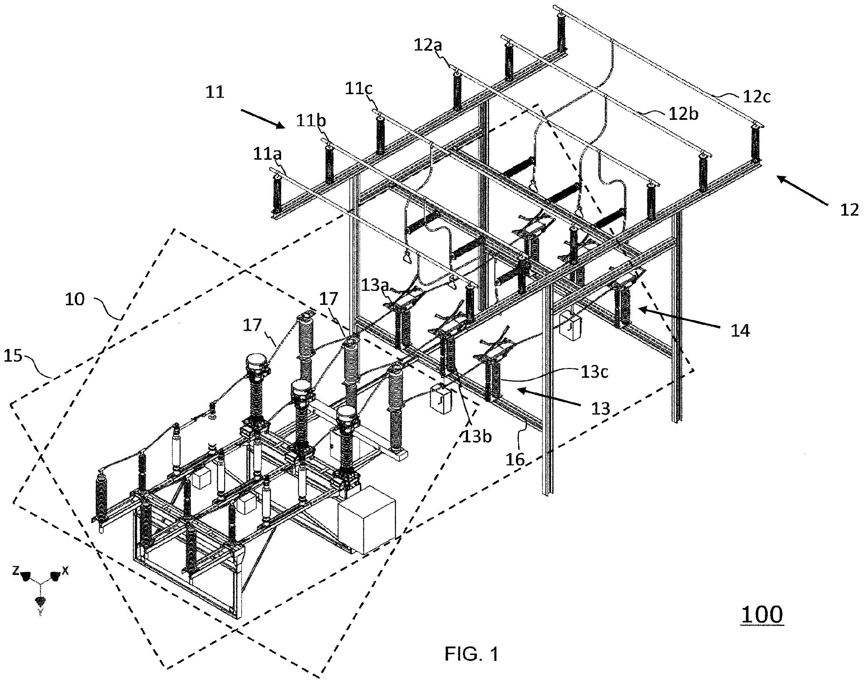

FIG. 1 zeigt eine luftisolierte elektrische Schaltanlage 100 mit einem elektrischen Schaltfeldmodul 10. Die luftisolierte elektrische Schaltanlage 100 kann beispielsweise als Umspannwerk ausgebildet sein und dem Umspannen zwischen verschiedenen Spannungsebenen eines elektrischen Energieversorgungsnetzes dienen. Die luftisolierte elektrische Schaltanlage 100 weist eine erste Sammelschiene 11 und eine zweite Sammelschiene 12 auf. Die erste Sammelschiene 11 weist für die 3 Phasen des elektrischen Drehstromnetzes jeweils separate Leitungen 11a, 11b und 11c auf. Die zweite Sammelschiene 12 weist für die 3 Phasen des elektrischen Drehstromnetzes jeweils separate Leitungen 12a, 12b und 12c auf.

Zum Anschluss eines Schaltfeldes 15 an die erste Sammelschiene 11 ist eine Trennvorrichtung 13 vorgesehen. Die Trennvorrichtung 13 umfasst drei Sammelschienentrenner 13a, 13b und 13c, die als Pantographentrenner ausgebildet sind. Die Sammelschienentrenner 13a, 13b und 13c sind unterhalb der ersten Sammelschiene 11 auf einem Tragbalken 16 angeordnet und dienen der sichtbaren Trennung des elektrischen Schaltfeldes 15 von der ersten Sammelschiene 11. In der FIG. 1 sind die Sammelschienentrenner 13a, 13b und 13c von der Sammelschiene 11 getrennt. Zum Anschluss des elektrischen Schaltfeldes 15 an die Sammelschiene 11 können die Sammelschienentrenner hochgefahren und mit der Sammelschiene 11 elektrisch verbunden werden.

Zusätzlich oder alternativ kann das Schaltfeld 15 mittels einer Trennvorrichtung 14 an die zweite Sammelschiene 12 angeschlossen werden. Die Trennvorrichtung 14 umfasst ebenfalls drei nicht näher bezifferte Sammelschienentrenner 14, die ebenfalls als Pantographentrenner ausgebildet sind. Die Sammelschienentrenner 14 dienen der sichtbaren Trennung des elektrischen Schaltfeldes 15 von der zweiten Sammelschiene 12. In der FIG. 1 sind die Sammelschienentrenner 14 von der Sammelschiene 12 getrennt. Zum Anschluss des elektrischen Schaltfeldes 15 an die Sammelschiene 12 können die Sammelschienentrenner 14 hochgefahren und mit der Sammelschiene 12 elektrisch verbunden werden.

Die Sammelschienentrenner 13a, 13b und 13c und/oder die Sammelschienentrenner 14 sind mit dem elektrischen Schaltfeldmodul 10 über einen Kabelschacht elektrisch verbunden, welcher Steuerleitungen zur Ansteuerung der Trennvorrichtungen 13 und 14 enthält. Ausserdem sind die Sammelschienentrenner 13a, 13b und 13c und/oder die Sammelschienentrenner 14 mit dem elektrischen Schaltfeldmodul 10 über Hochspannungskabel 17 zur Weiterleitung einer Hochspannung elektrisch verbunden.

Das elektrische Schaltfeld 15 wird somit von dem elektrischen Schaltfeldmodul 10 und den Sammelschienentrennern 13a, 13b und 13c bzw. den Sammelschienentrennern 14 gebildet.

Die Sammelschienentrenner 13a, 13b, 13c sowie 14 sind gemäss der Norm EN-62271-102 ausgebildet.

Das elektrische Schaltfeld 15 umfasst im Allgemeinen die zur Realisierung einer speziellen Übertragungs- oder Verteilungsaufgabe erforderlichen Betriebsmittel.

Gemäss Ausgestaltungen der Erfindung sind das elektrische Schaltfeldmodul 10 und das luftisolierte elektrische Schaltfeld 15 gemäss der Norm EN61936-1 gebaut.

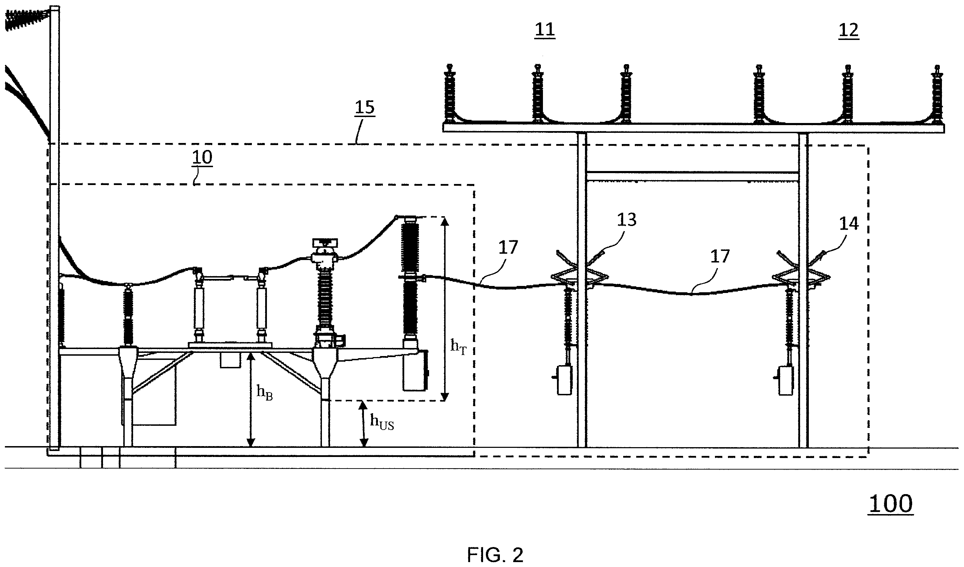

FIG. 2 zeigt eine zu der 3-dimensionalen Ansicht gemäss FIG. 1 korrespondierende Seitenansicht der luftisolierten elektrischen Schaltanlage 100.

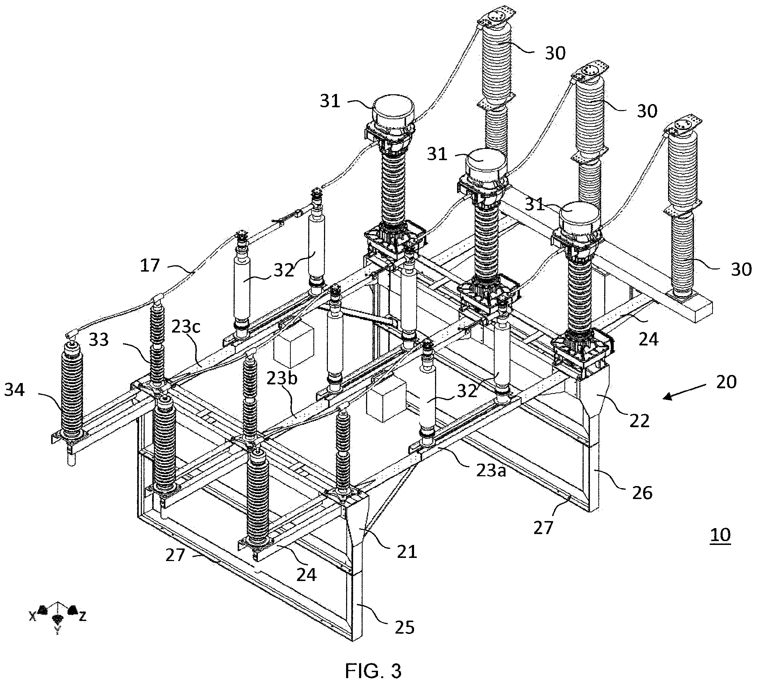

Fig. 3 zeigt eine vergrösserte 3-dimensionale Ansicht des elektrischen Schaltfeldmoduls 10.

Das Schaltfeldmodul 10 weist einen Tragrahmen 20 auf, der für die Aufnahme elektrischer Standard-Betriebsmittel zum Betrieb des elektrischen Schaltfeldes 15 vorgesehen ist. Das Schaltfeldmodul 10 weist als Standard-Betriebsmittel für jede Phase des Drehstromnetzes jeweils einen Leistungsschalter 30, eine Messeinheit 31, einen Linientrenner 32, einen Überspannungsableiter 33 und einen Kabelendverschluss 34 auf. Die Messeinheit 31 ist zum Messen von Spannung und/oder Strom des Hochspannungskabels 17 vorgesehen und kann als Messgruppe oder als Stromwandler und/oder als Spannungswandler ausgebildet sein.

Jedes der in dem Schaltfeldmodul 10 verwendeten Standard-Betriebsmittel ist jeweils nur für eine einzelne Funktion des elektrischen Schaltfeldes 15 gemäss der jeweils einschlägigen Norm ausgelegt. Somit sind die in dem Schaltfeldmodul 10 verwendeten Standard-Betriebsmittel standardisiert bzw. normiert und es kann jedes Betriebsmittel, dass der jeweils einschlägigen Norm entspricht, für das elektrische Schaltfeldmodul 10 verwendet werden. Dies hat den grossen Vorteil, dass die elektrischen Betriebsmittel des Schaltfeldmoduls 10 herstellerunabhängig ausgetauscht werden können. Für die einzelnen Standard-Betriebsmittel des Schaltfeldmoduls 10 sind insbesondere folgende Normen einschlägig: Für den Leistungsschalter 30 die EN 62271-100, für die Messeinheit 31 die IEC 61869-1/2/3 oder IEC 60044-7/8, für den Linientrenner 32 die EN 62271-102, für den Überspannungsableiter 33 die IEC 60099-5 und für den Kabelendverschluss 34 die IEC 60840.

Das Schaltfeld 15 gemäss Fig. 1 wird somit mittels einzelnen geprüften Betriebsmitteln umfassend die Trennvorrichtungen 13, 14, die Leistungsschalter 30, die Messeinheiten 31, die Linientrenner 32, die Überspannungsableiter 33 und die Kabelendverschlüsse 34 gebildet. Hier ist darauf hinzuweisen, dass gemäss anderen Ausgestaltungen der Erfindung das Schaltfeld 15 auch ohne die Überspannungsableiter 33 und die Kabelendverschlüsse 34 gebildet werden kann. Somit kann das luftisolierte Schaltfeld 15 gemäss einer anderen Ausgestaltung der Erfindung auch lediglich aus einem Sammelschienentrenner, einem Leistungsschalter, einer Messeinheit und einem Linientrenner bestehen.

Für jedes der Standard-Betriebsmittel des Schaltfeldes 15 wird die jeweils einschlägige separate Norm eingehalten. Dadurch wird sichergestellt, dass diese Betriebsmittel von unterschiedlichen Lieferanten eingesetzt werden können. Aus den einzelnen oben angegebenen Normen ist ersichtlich, dass die jeweiligen Funktionen jeweils separat behandelt werden. Das Schaltfeldmodul 10 nutzt somit nur Betriebsmittel mit einer Funktion, die klar der jeweiligen Norm zugewiesen werden kann.

Der in der FIG. 3 dargestellte Tragrahmen 20 weist ein erstes oberes Stirnelement 21 und ein zweites oberes Stirnelement 22 auf. Ausserdem weist der Tragrahmen 20 eine erste Längsstrebe 23a, eine zweite Längsstrebe 23b und eine dritte Längsstrebe 23c auf. Das erste obere Stirnelement 21 und das zweite obere Stirnelement 22 sind rechteckförmig ausgebildet. Die drei Längsstreben 23a, 23b und 23c sind zwischen dem ersten oberen Stirnelement 21 und dem zweiten oberen Stirnelement 22 angeordnet und verbinden diese miteinander. Vorzugsweise sind die drei Längsstreben 23a, 23b und 23c mit dem ersten oberen Stirnelement 21 und dem zweiten oberen Stirnelement 22 verschraubt. Gemäss anderen Ausführungsformen können sie aber auch z.B. verschweisst sein.

Der Tragrahmen 20 weist ausserdem Kragarme 24 auf, die jeweils an dem ersten oberen Stirnelement 21 bzw. dem zweiten oberen Stirnelement 22 befestigt sind und sich von dem ersten oberen Stirnelement 21 bzw. dem zweiten oberen Stirnelement 22 in horizontaler Richtung entgegen den Längsstreben 23a, 23b, 23c nach aussen hin erstrecken. Vorzugsweise sind die Kragarme 24 mit dem ersten oberen Stirnelement 21 bzw. dem zweiten oberen Stirnelement 22 verschraubt. Gemäss anderen Ausführungsformen können sie aber auch z.B. verschweisst sein.

Das Schaltfeldmodul 10 weist ferner ein erstes unteres Stirnelement 25 und ein zweites unteres Stirnelement 26 auf. Das erste untere Stirnelement 25 und das zweite untere Stirnelement 26 sind ebenfalls rechteckförmig oder quadratisch ausgebildet. Das erste untere Stirnelement 25 ist mit dem ersten oberen Stirnelement 21 verbunden, insbesondere verschraubt, wobei das erste obere Stirnelement in vertikaler Richtung oben auf dem ersten unteren Stirnelement 25 aufgesetzt ist. In entsprechender Weise ist das zweite untere Stirnelement 26 mit dem zweiten oberen Stirnelement 22 verbunden, insbesondere verschraubt, wobei das zweite obere Stirnelement 22 in vertikaler Richtung (y-Richtung) oben auf dem zweiten unteren Stirnelement 25 aufgesetzt ist. Somit bilden die Stirnelemente 21, 25 sowie 22, 26 jeweils eine Stirneinheit, die als Beine bzw. Füsse bzw. Stütze des Tragrahmens 20 fungieren.

Hierzu weisen das erste untere Stirnelement 25 und das zweite untere Stirnelement 26 jeweils ein unteres horizontales Auflageelement 27 auf. Diese Auflageelemente 27 werden durch die unteren Schenkel der rechteckförmigen unteren Stirnelemente 25, 26 gebildet. Diese horizontalen Auflageelemente 27 sind besonders geeignet, auf einem Betonfundament befestigt zu werden.

Die rechteckförmige Ausbildung der Stirnelemente 21, 22, 25 und 26 gewährleistet eine hohe Stabilität des Tragrahmens 20. Gleichzeitig ermöglicht die modulare Ausbildung der Stirneinheiten 21, 22, 25 und 26 einen einfachen Transport des Tragrahmens 20. So können die unteren Stirnelemente 25, 26 zum Transport des Tragrahmens 20 abgeschraubt werden, separat transportiert werden und vor Ort in der luftisolierten elektrischen Schaltanlage 100 wieder zusammengeschraubt werden. Damit lässt sich insbesondere eine kompakte Transporthöhe des Schaltfeldmoduls 10 erzielen.

Gemäss dem in der FIG. 3 gezeigtem Ausführungsbeispiel sind die Kabelendverschlüsse 34 an den Kragarmen 24 des ersten oberen Stirnelementes 21 angeordnet. Die Leistungsschalter 30 sind gegenüberliegend an den Kragarmen 24 des zweiten oberen Stirnelementes 22 angeordnet. Die Überspannungsableiter 33 sind an dem ersten oberen Stirnelement 21 angeordnet. Die Messeinheiten 31 sind an dem zweiten oberen Stirnelement 22 angeordnet. Schliesslich sind die Linientrenner 32 an den Längsstreben 23a, 23b und 23c des Schaltfeldmoduls 10 angeordnet. Die Befestigung der Standard-Betriebsmittel 30, 31, 32, 33 und 34 an dem Tragrahmen 20 erfolgt vorzugsweise mittels Verschraubung.

Der so ausgebildete Tragrahmen 20 ist eine sehr kompakte, fertigungstechnisch effiziente, flexible und dennoch stabile Bauform.

Das elektrische Schaltfeldmodul 10 ist vorzugsweise für einen Spannungsbereich zwischen 72 kV und 145 kV ausgelegt.

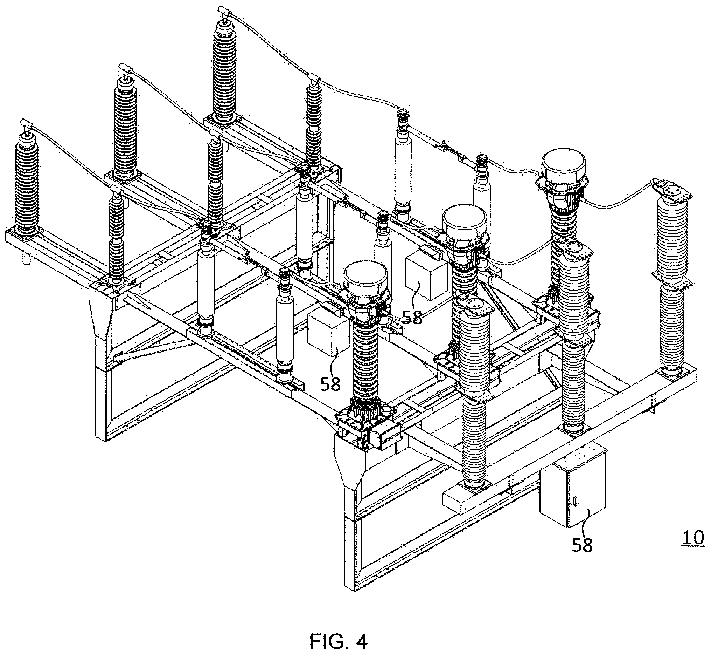

Fig. 4 zeigt eine andere vergrösserte 3-dimensionale Ansicht des elektrischen Schaltfeldmoduls. Hier sind insbesondere drei Steuermodule 58 zur Ansteuerung der Linientrenner 32 und der Leistungsschalter 30 erkennbar.

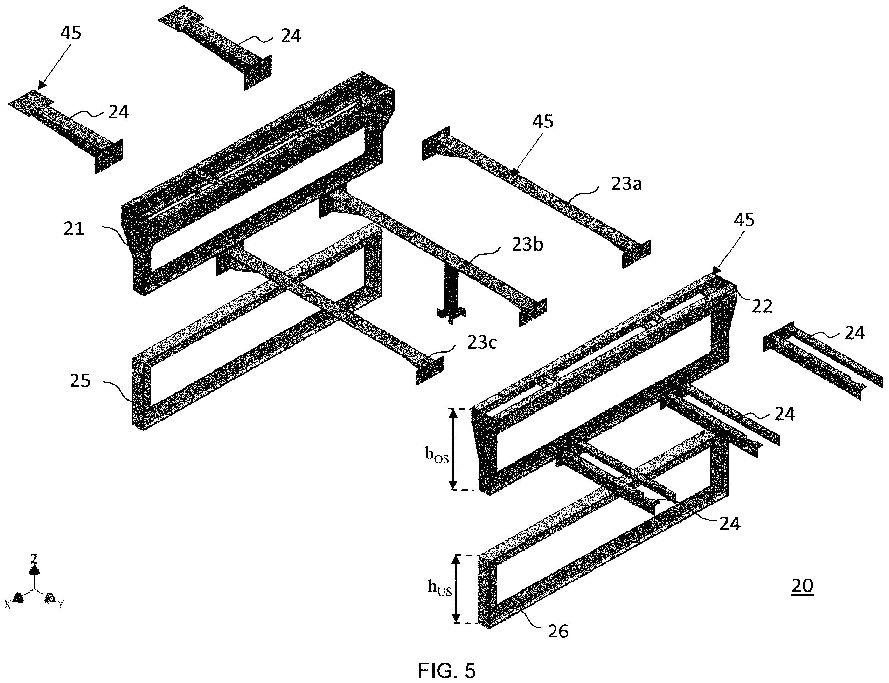

Fig. 5 zeigt eine Explosionsansicht des Tragrahmens 20 des elektrischen Schaltfeldmoduls 10.

Hier ist zu erkennen, dass der Tragrahmen 20 vordefinierte Befestigungspunkte 45 für die Befestigung der elektrischen Standard-Betriebsmittel aufweist. Diese Befestigungspunkte 45 sind als Bohrlöcher 45 ausgebildet. Die Betriebsmittel 30, 31, 32, 33 und 34 können in einfacher und effizienter Weise mit Schrauben in den Bohrlöchern 45 befestigt werden. Dabei können für jedes Betriebsmittel Lochbilder bzw. Lochanordnungen für die Betriebsmittel verschiedener Hersteller vorgesehen sein. Dies ermöglicht den schnellen, effizienten und herstellerunabhängigen Austausch der Betriebsmittel bei gleichzeitiger Sicherstellung der erforderlichen Isolationsabstände. Die Befestigungspunkte 45 sind insbesondere derart gewählt, dass die Isolationsabstände gemäss der Norm EN61936-1 eingehalten werden.

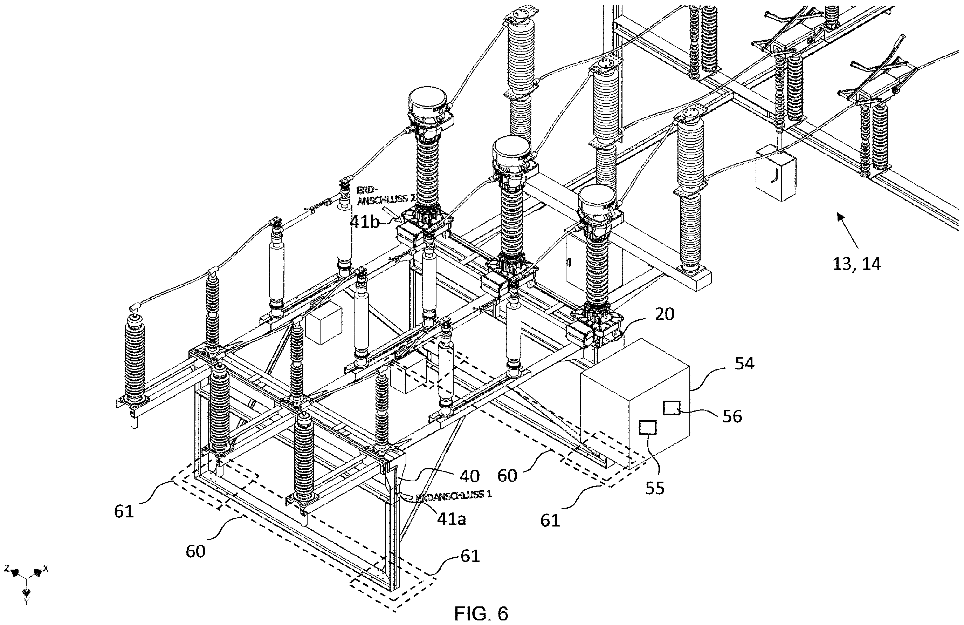

FIG. 6 zeigt eine vergrösserte 3-dimensionale Ansicht des elektrischen Schaltfeldmoduls mit Anschluss an einen Sammelschienentrenner.

Hier ist insbesondere zu erkennen, dass der Tragrahmen ein Erdungssystem 40 aufweist. Dieses Erdungssystem 40 hat zwei Anschlusspunkte 41a, 41b zum Anschluss an die Erdung der luftisolierten Schaltanlage 100, welche in der Fig. 6 auch als Erdanschluss1 bzw. Erdanschluss 2 bezeichnet sind. Das Erdungssystem 40 kann als Erdungsverkabelung oder mittels Erdungsbändern ausgeführt sein. Die Erdungsbänder können beispielsweise aus Kupfer als Vollmaterial ausgeführt sein.

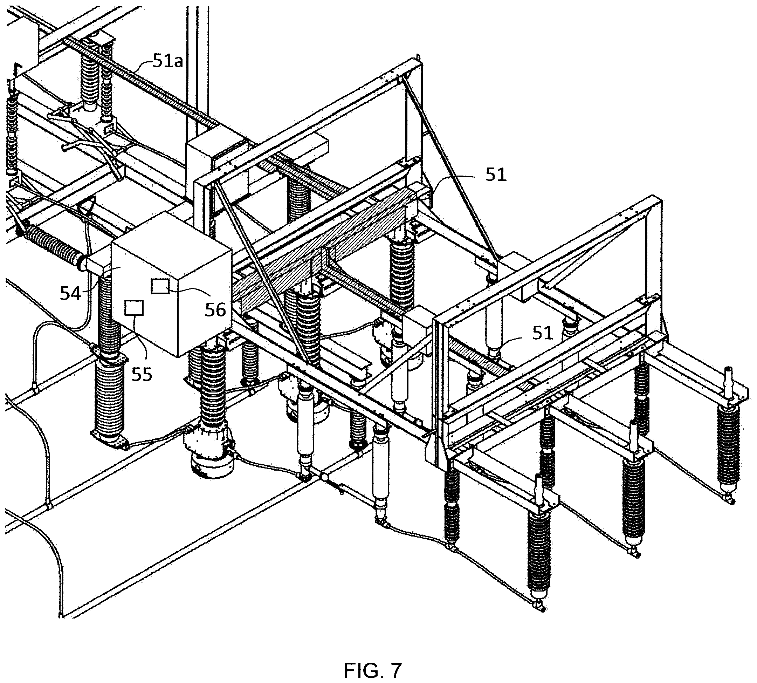

FIG. 7 zeigt eine vergrösserte 3-dimensionale Ansicht von unten auf das elektrische Schaltfeldmodul 20 mit schraffiert dargestellten Kabelkanälen bzw. Kabelschächten 51 für eine Sekundärverkabelung. Die Sekundärverkabelung ist für die Ansteuerung der elektrischen Standard-Betriebsmittel 30, 31, 32, 33 und 34 vorgesehen. Gemäss einer bevorzugten Ausgestaltung weist das Schaltfeldmodul 10 einen Kabelschacht 51a mit zugehörigen Kabeln für den Anschluss der Sammelschienentrenner 13, 14 auf. Damit lässt sich das Schaltfeldmodul 10 sehr einfach und effizient an die Sammelschienentrenner 13 bzw. 14 anschliessen, wodurch ein komplettes Schaltfeld realisiert ist.

An dem Tragrahmen 20 ist ferner ein Steuerschrank 54 befestigt, der mit der Sekundärverkabelung elektrisch verbunden ist. Der Steuerschrank 54 kann beispielsweise an dem Tragrahmen 20 angeschraubt sein. Der Steuerschrank 54 enthält sowohl Steuerelektronik 55 zur Steuerung der elektrischen Standard-Betriebsmittel 30, 31, 32, 33, 34, 13 und 14 als auch elektrische Schutzkomponenten 56 wie beispielsweise elektrische Sicherungen zum Schutz der Betriebsmittel des Schaltfeldmoduls 10. Der Steuerschrank 54 bzw. die Steuerelektronik 55 und die elektrischen Schutzkomponenten 56 können beispielsweise mittels Steckverbindern oder anderen Interfacekomponenten mit der Sekundärverkabelung verbunden sein.

Gemäss bevorzugten Ausgestaltungen der Erfindung weist das Schaltfeldmodul 20 eine Länge l in x-Richtung zwischen 7 m und 9 m und eine Breite b in z-Richtung zwischen 3.5 m und 4.5 m auf. Wie beschrieben können die unteren Stirnelemente 25, 26 zum Transport abgeschraubt werden. Damit kann eine Transporthöhe h_{T} in y-Richtung zwischen 3.5 m und 4.5 m realisiert werden. Im montierten Zustand kann dann mittels Verschraubung der oberen Stirnelemente 21, 22 mit den unteren Stirnelementen 25, 26 eine lichte Höhe h_{B} der Betriebsmittel von 2.25 m oder mehr erreicht werden. (siehe Fig. 2). Die Höhe h_{US} der unteren Stirnelemente 25, 26 kann je nach Bedarf variiert werden, um die für die jeweilige Einbausituation erforderliche lichte Höhe h_{B} des Schaltfeldmoduls zu erzielen. Damit kann die lichte Höhe h_{B} des Schaltfeldmoduls sehr flexibel und effizient geändert und angepasst werden. Die Höhe hus der unteren Stirnelemente 25, 26 kann gemäss Ausgestaltungen der Erfindung beispielsweise zwischen 1.50 m und 1.90 m gewählt werden und die Höhe hos der oberen Stirnelemente 21, 22 zwischen 0.4 m und 0.8 m (siehe Fig. 5).

Wie in der Fig. 6 schematisch gestrichelt angedeutet kann das Schaltfeldmodul 20 bzw. die unteren Stirnelemente 25, 26 auf zwei streifenförmigen Betonfundamenten 60 befestigt werden. Alternativ kann das Schaltfeldmodul 20 auf vier punktförmigen Betonfundamenten 61 befestigt werden.

Bei beiden Varianten ist die Anzahl der Fundamente und der Betonierungsaufwand im Vergleich zu herkömmlichen luftisolierten Schaltfeldern deutlich verringert.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Elektrisches Schaltfeldmodul für eine luftisolierte elektrische Schaltanlage, **gekennzeichnet durch** einen Tragrahmen (20), der für die Aufnahme mehrerer elektrischer Standard-Betriebsmittel (30, 31, 32) zum Betrieb eines elektrischen Schaltfeldes (15) vorgesehen ist.

2. Elektrisches Schaltfeldmodul nach Anspruch 1, **dadurch gekennzeichnet**, das an dem Tragrahmen (20) als Standard-Betriebsmittel je Phase ein Leistungsschalter (30), eine Messeinheit (31), insbesondere eine Messgruppe, und ein Trenner (32), insbesondere ein Linientrenner, angeordnet sind.

3. Elektrisches Schaltfeldmodul nach einem der vorhergehenden Ansprüche, **dadurch gekennzeichnet**, das an dem Tragrahmen (20) als Standard-Betriebsmittel je Phase ein Überspannungsableiter (33) und ein Kabelendverschluss (34) angeordnet sind.

4. Elektrisches Schaltfeldmodul nach einem der vorhergehenden Ansprüche, **dadurch gekennzeichnet, dass** die Standard-Betriebsmittel (30, 31, 32, 33, 34) jeweils nur für eine einzelne Funktion, insbesondere eine Funktion gemäss einer der nachfolgenden Normen, ausgelegt sind:
EN 62271-100;
IEC 61869-1/2/3;
EN 62271-102;
IEC 60099-5;
IEC 60840; oder
IEC 60044-7/8.

5. Elektrisches Schaltfeldmodul nach einem der vorhergehenden Ansprüche, **dadurch gekennzeichnet, dass** der Tragrahmen (20) ein erstes oberes Stirnelement(21), ein zweites oberes Stirnelement (22)und Längsstreben (23a, 23b, 23c), insbesondere drei Längsstreben, aufweist, wobei das erste und das zweite obere Stirnelement rechteckförmig oder quadratisch ausgebildet und wobei die drei Längsstreben das erste obere Stirnelement und das zweite obere Stirnelement verbinden.

6. Elektrisches Schaltfeldmodul nach Anspruch 5, **dadurch gekennzeichnet, dass** der Tragrahmen (20) Kragarme (24) aufweist, die jeweils an dem ersten oberen Stirnelement (21) und dem zweiten oberen Stirnelement (22) befestigt sind und sich von dem ersten oberen Stirnelement bzw. dem zweiten oberen Stirnelement in horizontaler Richtung entgegen den Längsstreben (23a, 23b, 23c) nach aussen hin erstrecken.

7. Elektrisches Schaltfeldmodul nach Anspruch 5 oder 6, **dadurch gekennzeichnet, dass** das Schaltfeldmodul (10) ein erstes unteres Stirnelement (25) und ein zweites unteres Stirnelement (26) aufweist, wobei
das erste und das zweite untere Stirnelement rechteckförmig oder quadratisch ausgebildet sind;
das erste untere Stirnelement (25) mit dem ersten oberen Stirnelement (21) verbindbar, insbesondere verschraubbar, ist;
das zweite untere Stirnelement (26) mit dem zweiten oberen Stirnelement (22) verbindbar, insbesondere verschraubbar, ist; und
das erste untere Stirnelement (25) und das zweite untere Stirnelement (26) jeweils ein unteres horizontales Auflageelement (27) aufweisen, welches zur Auflage auf einem Betonfundament (60, 61) vorgesehen ist.

8. Elektrisches Schaltfeldmodul nach den Ansprüchen 5 und 6, **dadurch gekennzeichnet, dass** die elektrischen Standard-Betriebsmittel (30, 31, 32, 33, 34) auf dem ersten oberen Stirnelement (21), dem zweiten oberen Stirnelement (22), den Längsstreben (23a, 23b, 23c) und den Kragarmen (24) angeordnet sind.

9. Elektrisches Schaltfeldmodul nach einem der vorhergehenden Ansprüche, **dadurch gekennzeichnet, dass** der Tragrahmen (20) ein Erdungssystem (40) umfasst, das wenigstens zwei Anschlusspunkte (41a, 41b) zum Anschluss an die Erdung der luftisolierten Schaltanlage (100) aufweist.

10. Elektrisches Schaltfeldmodul nach einem der vorhergehenden Ansprüche, **dadurch gekennzeichnet**, das der Tragrahmen (20) vordefinierte Befestigungspunkte (45) für die Befestigung der elektrischen Standard-Betriebsmittel (30, 31, 32, 33, 34) umfasst, wobei die Befestigungspunkte (45) insbesondere derart gewählt sind, dass die Isolationsabstände der Norm EN61936-1 entsprechen.

11. Elektrisches Schaltfeldmodul nach einem der vorhergehenden Ansprüche, **dadurch gekennzeichnet, dass** das Schaltfeldmodul (10) für einen Spannungsbereich zwischen 72 kV und 170 kV vorgesehen ist, insbesondere für einen Spannungsbereich zwischen 72kV und 145 kV.

12. Elektrisches Schaltfeldmodul nach einem der vorhergehenden Ansprüche, **dadurch gekennzeichnet, dass** der Tragrahmen (20) eine Sekundärverkabelung für die Ansteuerung der elektrischen Standard-Betriebsmittel (30, 31, 32, 33, 34) aufweist.

13. Elektrisches Schaltfeldmodul nach Anspruch 12, **dadurch gekennzeichnet, dass** an dem Tragrahmen (20) ein Steuerschrank (54) befestigt ist, der mit der Sekundärverkabelung elektrisch verbunden ist und sowohl Steuerelektronik (55) zur Steuerung der elektrischen Standard-Betriebsmittel als auch elektrische Schutzkomponenten (56) aufweist.

14. Elektrisches Schaltfeldmodul nach den Ansprüchen 2, 3, 5 und 6, **dadurch gekennzeichnet, dass**
die Kabelendverschlüsse (34) an den Kragarmen (24) des ersten oberen Stirnelementes (21) angeordnet sind;
die Leistungsschalter (30) an den Kragarmen (24) des zweiten oberen Stirnelementes (22) angeordnet sind;
die Überspannungsableiter (33) an dem ersten oberen Stirnelement (21) angeordnet sind;
die Messeinheiten (31) an dem zweiten oberen Stirnelement (22) angeordnet sind; und
die Trenner (32) an den Längsstreben (23a, 23b, 23c) des Schaltfeldmoduls (10) angeordnet sind.

15. Elektrisches Schaltfeldmodul nach einem der vorhergehenden Ansprüche, **dadurch gekennzeichnet**, das das Schaltfeldmodul (10) eine Länge zwischen 7 m und 9 m und eine Breite zwischen 3.5 m und 4.5 m aufweist.

16. Elektrisches Schaltfeldmodul nach einem der vorhergehenden Ansprüche, **dadurch gekennzeichnet, dass** das Schaltfeldmodul (10) zur Befestigung auf zwei streifenförmigen Betonfundamenten (60) oder vier punktförmigen Betonfundamenten (61) vorgesehen ist.

17. Elektrisches Schaltfeld, **gekennzeichnet durch** ein elektrisches Schaltfeldmodul (10) nach einem der Ansprüche 1 bis 16 und einen Sammelschienentrenner (13, 14), insbesondere einen Pantographentrenner.
